# EUROPEAN PATENT APPLICATION

(11) **EP 4 242 381 A1**
(43) Date of publication of application: **13.09.2023**
(21) Application number: 23160141.0
(22) Date of filing: 06.03.2023
(51) Int. Cl.: E02F 3/96, B23D 57/00, E02D 9/00, E02F 5/10

(54) **DEVICE FOR CUTTING, MOBILE WORKING MACHINE, METHOD AND GRIPPING MEMBER**

(30) Priority: 08.03.2022 FI 20225202
(71) Applicant: MotoCut Oy, 33470 Ylöjärvi (FI)
(72) Inventor: Tamminen, Marko, 39500 Ikaalinen (FI); Välimäki, Risto, 02230 Espoo (FI)
(74) Representative: LEITZINGER OY

(57) **Abstract**

The invention relates to a cutting device (1) of a mobile working machine, for cutting elongated objects (2), in particular piles (2), and for being connected to a mobile working machine, comprising a first gripping member (101) and a second gripping member (102), which gripping members (101,102) are pivotal around the same pivot axis (X), said gripping members (101,102) having gripping faces (101a,102a) delimiting from opposite sides a gripping gap (G) as viewed in direction of said pivot axis (X); and moving means (103) actuatable to move the gripping members (101,102) towards and away from each other; and cutting means (104) including a cutting unit (1040) for cutting an elongated object (2) placed in the gripping gap (G); wherein the gripping face (101a,102a) of each gripping member (101,102) is shaped to have a gripping recess (R) for receiving a side of the elongated object (2) placed in the gripping gap (G), the gripping recess (R) comprising: a bottom point (C0) via which a circle (Y1) passes, which circle (Y1) has said pivot axis (X) as centre; and a first flank portion (Pa) having a profile curved towards the bottom point (C0) from the outer side of the circle (Y1); and a second flank portion (Pb) having a profile curved towards the bottom point (C0) from the inner side of the circle (Y1). The invention also relates to a mobile working machine (200), a method for cutting an elongated object (2) and a gripping member (101,102).

## Description

### Field of the invention

The invention relates to cutting elongated objects with a cutting device connected to a mobile working machine. The elongated objects are preferably piles having circular cross section.

### Background of the invention

Metal piles and reinforced concrete piles can be used in forming foundations of buildings and more particularly for facilitating taking support from the soil. This kind of foundation is often referred to as a deep foundation. Piles are typically used to increase the ability of the soil to bear the weight of the building to be constructed on top of it. For example, if the soil is not firm, piles can be installed as additional bearing elements into the soil. The piles are driven into the soil in vertical position, preferably so deep that the friction between the pile and the soil assures the attachment of the pile or so that they meet a harder soil, such as bedrock below the softer soil. The piles are intended to function as the load-bearing structure, which takes on compressive and bending stresses.

The piles are typically elongated objects having a substantially constant profile. Piles can have various alternative cross-sectional profiles. Metal piles are generally hollow piles made of metal having circular cross section, but metal piles with a H-profile can also be used. Reinforced concrete piles are generally quadrangular in cross section, but these too could be formed circular in cross-section.

During construction, when the intended number of piles have been installed into the soil such that they receive support from the soil, they usually need to be shortened before continuing to the subsequent construction stages is possible. The piles can be shortened by cutting them to a desired length, e.g. such that their upper ends are level with each other. The number of piles to be cut is typically high, so the cutting of each pile needs to be performed quickly and efficiently so that the one can proceed swiftly to the subsequent phases of construction works.

In prior art, a cutting device has been used, which is connected to a mobile working machine, such as an excavator. Hereby, the cutting device can be moved around the site from pile to pile quickly.

For facilitating correct relative position between the cutting device and the pile to be cut, it is advantageous that the cutting device is able to grip the pile. Gripping may also be advantageous for handling of the pile upper end after cutting it loose from the stationary main part of the pile. There are such pile cutting devices known where the cutting device comprises gripping members movable towards each other by pivoting around spaced apart pivot axes for gripping by their gripping faces an elongated profile placed in the gripping gap from opposite sides, and away from each other for releasing the elongated profile from the grip. Such a device is known for example from publication WO 2013/153286, which discloses a device for cutting concrete piles. The disclosed device comprises moreover cutting means in the form of sawing means, which are arranged horizontally movable in the longitudinal direction of the gripping means along a guide rail as well as movable towards the object to be cut and away from it. By using a device like said cutting device, it is possible to automate cutting of piles *in situ.* A drawback of this kind of device has been that adjustment of the gripping means of the device have been difficult to fit piles of different radiuses with a structure that is simple and cheap to manufacture. A need for a solution which can alleviate these drawbacks has come up. It is noticed that accurate and simple positioning is particularly relevant when the cutting is to be implemented by plasma cutting of hollow metal tubes, since then the cutting device is often relatively critical e.g. when compared to cutting solid objects and/or to using cutting means such as saws which do not need to focus the cutting effect highly accurately.

### Brief description of the invention

The object of the invention is to introduce an improved solution for cutting elongated objects, in particular piles that are used in construction sites.

An object is particularly to introduce a solution by which one or more of the above-mentioned problems of prior art and/or drawbacks discussed or implied elsewhere in the description can be solved.

It is introduced, *inter alia,* embodiments where accurate, reliable, fast and easy positioning of different sized elongated objects to be cut is facilitated in operation of a cutting device, while the cutting device can have simple design and simple and fast operation.

It is brought forward a new cutting device of a mobile working machine, for cutting elongated objects, in particular piles, and for being connected to a mobile working machine, comprising
a first gripping member and a second gripping member, which gripping members are pivotal around the same pivot axis (X), said gripping members having gripping faces delimiting from opposite sides a gripping gap as viewed in direction of said pivot axis (X), the gripping members being movable towards each other by pivoting around said pivot axis (X) for gripping by their gripping faces an elongated object placed in the gripping gap from opposite sides, and away from each other for releasing the elongated object from the grip; and
moving means actuatable to move the gripping members towards and away from each other; and
cutting means including a cutting unit for cutting an elongated object placed in the gripping gap;
wherein the gripping face of each gripping member is shaped to have a gripping recess for receiving a side of the elongated object placed in the gripping gap, the recess comprising:
   a bottom point via which a circle (Y1) passes, which circle (Y1) has said pivot axis (X) as centre; and
   a first flank portion having a profile curved towards the bottom point from the outer side of the circle (Y1); and
   a second flank portion having a profile curved towards the bottom point from the inner side of the circle (Y1).

The profile of each of said first and second flank portion as viewed in direction of said pivot axis (X) follows a curve approaching the circle (Y1) which has pivot axis (X) as centre from the outer and inner side of the circle (Y1), respectively.

Each said curve is defined by plurality of successive points, wherein the end point of a normal vector of each point of the first flank portion is an end point of a same length normal vector of a point of the second flank portion, the end points of all said normal vectors being points of said circle (Y1) and thereby at same distance from the pivot axis (X).

With this kind of solution one or more of the above-mentioned objects can be facilitated.

Preferable further details of the cutting device are introduced in the following, which further details can be combined with the cutting device individually or in any combination.

In a preferred embodiment, the profile of the first flank portion is concave and the profile of the second flank portion is convex.

In a preferred embodiment, the cutting device comprises a frame and the gripping members are mounted pivotally on the frame. The frame may comprise plurality of frame parts attached to each other.

In a preferred embodiment, the cutting means are mounted on the aforementioned frame of the cutting device. Thus, the gripping members mounted pivotally on the frame are pivotal relative to the frame, as well as relative to the cutting means.

In a preferred embodiment, each said curve approaches the line extending via the pivot axis (X) and the bottom point.

In a preferred embodiment, the recess has a bottom portion defined by plurality of successive points including said bottom point. The bottom portion is between the first and second flank portion and connects these to each other. In particular, the bottom portion defines the bottom of the gripping recess.

In a preferred embodiment, the cutting means comprises at least one movable cutting unit; and a guide track for guiding movement of the at least one movable cutting unit, the guide track being shaped to guide the at least one cutting unit along a circular path with constant distance from a central axis (Z), which central axis (Z) extends via a point of the aforementioned circle (Y1);which has pivot axis (X) as centre, and means for moving the at least one cutting unit along the guide track.

In a preferred embodiment, the guide track forms, or has a first state where it forms, a ring around the central axis (Z). Preferably, the ring is openable and closeable.

In a preferred embodiment, the guide track comprises a first track part and a second guide track part (b), which are movable away from each other for opening a gap (G2) between them as viewed in direction of said central axis (Z), for allowing an elongated object to be brought via the gap (G2) to be between the track parts , and towards each other for closing the gap (G2) such that the track parts form a ring around the central axis (Z).

In a preferred embodiment, the cutting means comprises a movable cutting unit which is a plasma cutting unit and comprises a cutting torch.

In a preferred embodiment, the first flank portion and second flank portion are each at least 3 cm high, preferably more, most preferably at least 10 cm high, as measured in direction of the pivot axis (X), in particular for thereby providing that a line of contact is realized between the first flank portion and the elongated object having circular cross section placed in the gripping gap (G) when it is gripped.

In a preferred embodiment, the cutting device comprises one of said first gripping members and two of the second gripping members, which are all offset from each other in direction of the axis (X), one second gripping member being offset from the first gripping member towards one direction along the axis (X), and one second gripping member being offset from the first gripping member towards the other direction along the axis (X).

In a preferred embodiment, the profiles of said first and second flank portion of the first gripping member and the second gripping member are symmetrical and mirror-like relative to a line (s) which extends via the pivot axis X orthogonally to the pivot axis X

In a preferred embodiment, the gripping members are movable relative to each other only by pivoting around the pivot axis X.

It is also brought forward a new mobile working machine comprising a cutting device of a mobile working machine, which cutting device is as defined anywhere above.

With this kind of solution one or more of the above-mentioned objects can be facilitated.

Preferable further details of the mobile working machine have been introduced above as well as will be introduced in the following, which further details can be combined with the mobile working machine individually or in any combination.

In a preferred embodiment, the mobile working machine comprises a tiltable boom and the cutting device is connected to the tiltable boom.

In a preferred embodiment, the mobile working machine comprises one or more motor-driven moving members supportable on a terrain and for moving the working machine on the terrain.

In a preferred embodiment, the mobile working machine comprises a motor for moving the motor-driven moving members. Preferably, the moving members are rotatable moving members and rotatable by the motor. The moving members are most preferably tyres or caterpillar tracks.

In a preferred embodiment, the cutting device or the mobile working device comprises a computer implemented control system configured to control, preferably in response to the input commands received via a user interface, one or more of the following:
actuation of said actuating means,
operation of said cutting means, in particular operation of the means for moving the at least one cutting unit.
operation of means for moving a first track part and a second guide track part of a guide track for guiding movement of the at least one movable cutting unit away from each other and towards each other.

It is also brought forward a new method for cutting an elongated object, in particular a pile comprising
providing a cutting device and/or a mobile machine as defined anywhere above; and
positioning the cutting device such that an elongated object, in particular pile, is placed in the gripping gap (G); and
actuating the moving means to move the gripping members towards each other to grip by their gripping faces the elongated object placed in the gripping gap (G) from opposite sides; and
cutting the elongated object with the cutting means.

With this kind of solution one or more of the above-mentioned objects can be facilitated.

Preferable further details of the method have been introduced above as well as will be introduced in the following, which further details can be combined with the method individually or in any combination.

In a preferred embodiment, the method further comprises, by a computer implemented control system, preferably in response to input commands received via a user interface:
controlling actuation of said actuating means, and/or
operation of the means for moving the at least one cutting unit of said cutting means by a computer implemented control system, and/or
controlling operation of means for moving a first track part and a second guide track part of a guide track for guiding movement of the at least one movable cutting unit away from each other and towards each other.

In a preferred embodiment, the method further comprises, at a suitable moment before said step of positioning the cutting device, driving plurality of elongated objects into soil in vertical position.

It is also brought forward a new gripping member comprising a pivot axis (X), and a gripping face shaped to have a gripping recess for receiving a side of an elongated object, the recess comprising:
a bottom point via which a circle (Y1) passes, which circle (Y1) has said pivot axis (X) as centre; and
a first flank portion having a profile curved towards the bottom point from the outer side of the circle (Y1); and
a second flank portion having a profile curved towards the bottom point from the inner side of the circle (Y1).

The profile of each of said first and second flank portion as viewed in direction of said pivot axis (X) follows a curve approaching the circle (Y1) which has pivot axis (X) as centre from the outer and inner side of the circle (Y1), respectively.

Each said curve is defined by plurality of successive points, wherein the end point of a normal vector of each point of the first flank portion is an end point of a same length normal vector of a point of the second flank portion, the end points of all said normal vectors being points of said circle (Y1) and thereby at same distance from the pivot axis (X).

With this kind of solution one or more of the above-mentioned objects can be facilitated.

Preferable further details of the gripping member have been introduced above as well as will be introduced in the following, which further details can be combined with the gripping member individually or in any combination.

In a preferred embodiment, each said curve approaches the line (L) extending via the pivot axis (X) and bottom point.

In a preferred embodiment, the recess has a bottom portion defined by plurality of successive points including said bottom point. The bottom portion is between the first and second flank portion and connects these to each other. In particular, the bottom portion defines the bottom of the gripping recess.

In a preferred embodiment, the profile of the first flank portion is concave and the profile of the second flank portion is convex.

In a preferred embodiment, generally, the elongated object is an object having circular cross section, preferably a pile, most preferably a pile, which is a hollow metal tube having circular cross section.

In a preferred embodiment, generally, the elongated object is a pile protruding upwards from soil.

### Brief description of the drawings

In the following, the present invention will be described in more detail by way of example and with reference to the attached drawings, in which
FIG. 1 illustrates an embodiment of a cutting device implementing an embodiment of a gripping member.
FIG. 2 illustrates the cutting device of Fig. 1 in gripping state.
FIG. 3 illustrates the cutting device of Fig. 1 in gripping state when the elongated object 2 is thinner than the one shown in Figs. 1 and 2.
FIG. 4-6 illustrates details of the gripping member of Figs. 1-3.
FIG. 7 illustrates three dimensionally preferred further details of the cutting device and gripping member of Figs. 1-6 in gripping state.
FIG. 8 illustrates as a side view preferred further details of the cutting device of Figs. 1-7 in gripping state.
FIG. 9 illustrates preferred further features of the cutting device of Figs. 1-8.
Figures 10-12 illustrates a mobile working machine according to an embodiment implementing an embodiment of the cutting device and steps of a method for cutting an elongated object according to an embodiment.

### Detailed description

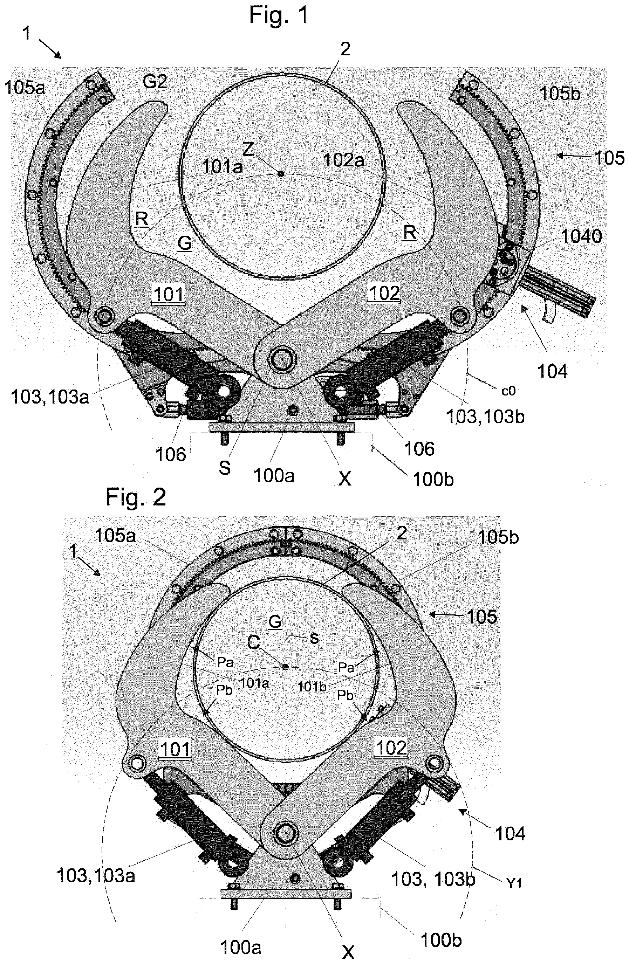

Figure 1 illustrates an embodiment of a cutting device 1 of a mobile working machine, for cutting elongated objects 2, and for being connected to a mobile working machine. Said object 2 is preferably an elongated object having a circular cross section, preferably a pile, most preferably a pile, which is a hollow metal tube. Figure 1 also illustrates an embodiment of a gripping member 101;102.

The cutting device 1 comprises a first gripping member 101 and a second gripping member 102, which gripping members 101,102 are pivotal around the same pivot axis X. Said gripping members 101,102 have gripping faces 101a,102a delimiting from opposite sides a gripping gap G as viewed in direction of said pivot axis X. The gripping members 101,102 are movable towards each other by pivoting around said pivot axis X for gripping by their gripping faces 101a,102a an elongated object 2 placed in the gripping gap G from opposite sides, and away from each other for releasing the elongated object 2 from the grip.

Figure 1 illustrates the gripping members 101,102 in a releasing state, when they have been moved far away from each other and Figure 2 illustrates the gripping members 101,102 in a gripping state when they have been moved towards each other for gripping by their gripping faces 101a,102a an elongated object 2 placed in the gripping gap G from opposite sides. The elongated object 2 is an elongated object having a circular cross section, and most preferably a pile which is a hollow metal tube. This kind of objects are advantageous to be cut by cutting means able to revolve around the tube. For such kind of cutting, the object 2 is particularly advantageous to be positioned such that the centre thereof is the same independent of its size.

The cutting device 1 comprises moving means 103 actuatable to move the gripping members 101,102 towards and away from each other. The moving means 103 means can be hydraulic or pneumatic for example. The moving means 103 preferably comprise a first actuator 103a actuatable to move the first gripping member 101 and a second actuator 103b actuatable to move the second gripping member 102. Each said actuator 103a,b can be a hydraulic or pneumatic cylinder for example.

The cutting device 1 comprises cutting means 104 including a cutting unit 1040 for cutting an elongated object 2 placed in the gripping gap G. The gripping face 101a,102a of each gripping member 101,102 is shaped to have a gripping recess R for receiving a side of the elongated object 2 placed in the gripping gap G. The recess R comprises:
a bottom point C0 via which a circle Y1 passes, which circle Y1 has said pivot axis X as centre; and
a first flank portion Pa having a profile curved towards the bottom point C0 from the outer side of the circle Y1; and
a second flank portion Pb having a profile curved towards the bottom point C0 from the inner side of the circle Y1.

The gripping members 101,102 being pivotal around the same pivot axis X facilitates simplicity of the design as well as operation of the device since freedom of movement of the gripping members can be made simple and limited as well as number of components can be kept small. For facilitating these advantages further, the gripping members 101,102 are most preferably movable relative to each other only by pivoting around the pivot axis X. Thereby, additional relative movement between the gripping members 101,102 is prevented, and thus the circle Y1 intersects each gripping member in similar manner regardless of pivoting of the gripping member 101,102. This facilitates controllability of shape of the gap G between the gripping members 101,102.

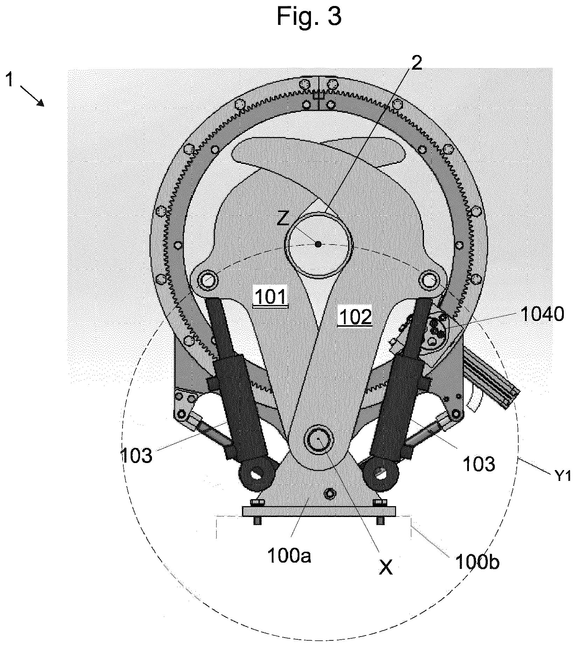

The flank portions of the gripping recesses R of the gripping member 101,102 being curved as defined towards said bottom point C0 which is on circle Y1 facilitates centralizing effect since the flanks portions are able to exert a force on the object 2 which force is directed towards the circle Y1 from both inner and outer side of the circle Y1, which facilititates centralizing of objects of different diameters similarly. If the object 2 to be cut can assume in gripping a position such that the central axis of the object 2 is independent of the objects' diameter, this facilitates simplicity of the cutting means, because positioning of the cutting means will become simpler and easier to adapt to cutting objects of different thicknesses. For example, Figure 3 illustrates the cutting device 1 gripping an elongated object 2, in particular a hollow metal tube having circular cross section, which is thinner than the one shown in Figures 1 and 2. As visible, the elongated object 2 is centralized by the gripping members 101,102 such that the central axis thereof is at the same location as the central axis C of the elongated object 2 shown and gripped in Figure 2.

In the preferred embodiments, the profile of the first flank portion Pa is concave and the profile of the second flank portion Pb is convex. Hereby, the recess shape efficiency of similar centralizing of objects of different diameters is facilitated.

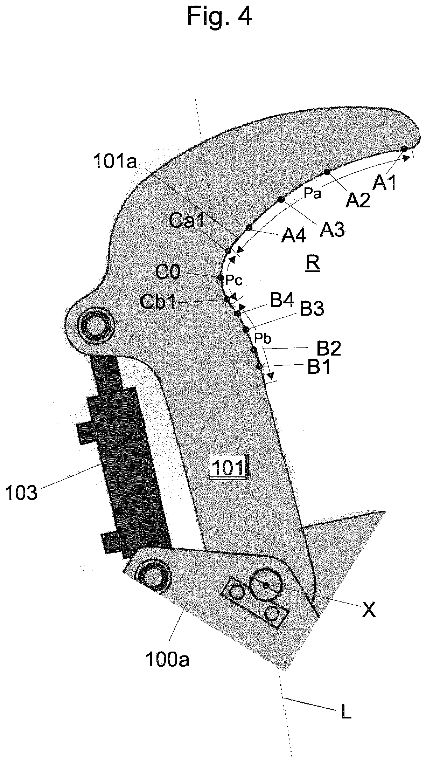

Figures 4-6 illustrate details of the first gripping member 101 of Figures 1-3. The details and description of the first gripping member 101 apply also for the second gripping member 102. The shapes of the flank portions Pa,Pb are explained by describing details of the curves that the profiles follow.

The cutting device 1 is more specifically such that the profile of each of said first and second flank portion Pa,Pb as viewed in direction of said pivot axis X follows a curve approaching said circle Y1, which has pivot axis X as centre, from the outer and inner side of the circle Y1, respectively. Here, each said curve in particular approaches the line L extending via the pivot axis X and bottom point C0 of the gripping recess of the gripping member 101. The cutting device 1 is more specifically such that each said curve is defined by plurality of successive points A1-A4; B1-B4, wherein the end point I1-I4 of a normal vector nA1-nA4 of each point A1-A4 of the first flank portion Pa is an end point of a same length normal vector nB1-nB4 of a point B1-B4 of the second flank portion Pb, the end points I1-I4 of all said normal vectors nA1-nA4, nA1-nA4 being points of said circle Y1 and thereby at same distance D from the pivot axis X. This provides that different sized elongated objects 2 become well centered such that the center point is constant.

In the preferred embodiments illustrated, the profiles of said first and second flank portion Pa,Pb of the first gripping member 101 and the second gripping member 102 are symmetrical and mirror-like relative to a line s which line s extends via the pivot axis X orthogonally to the pivot axis X. This facilitates controllability of shape of the gap G between the gripping members 101,102 as well as achieving a good centralizing effect with objects of different diameters. Also, this facilitates that it is possible to use similar members as the first gripping member 101 and the second gripping member 102, as it is the case in the presented examples where the gripping members 101, 102 are similar members but one of them has been flipped upside down.

In the preferred embodiment, the gripping recess R has a bottom portion Pc defined by plurality of successive points including said bottom point C0. The bottom portion Pc defines the bottom of the gripping recess R. The bottom portion Pc is between the flank portions Pb and Pa and connects these to each other. In the preferred embodiment illustrated, the bottom portion Pc has a shape able to provide centralizing effect correspondingly as the flank portions Pa,Pb, but this is not necessary as will be described in the next paragraph.

In the preferred embodiment, the bottom portion Pc between the flank portions Pb and Pa is a continuation of each said flank portion Pb and Pa and connects these to each other. The bottom portion Pc can be shaped such that the definitions of the flank portions apply also to the "flank portions" of the bottom portion Pc. This is not necessary since the bottom portion Pc need not be utilized for contacting the object 2 necessarily at all, since the cutting device 1 need not be able to cut and grip very thin elongated objects. Thus, the bottom portion Pc could be relatively freely shaped, and its shape is not thereby necessarily relevant. For this reason the shape of the flank portions Pa and Pc are described and defined irrespectively of the shape of the bottom portion Pc. However, in the illustrated embodiment, the definitions of the flank portions apply also to the flank portions of the bottom portion Pc (also referred to as third and fourth flank portions) all the way to the bottom point Pc where it can be regarded that the third and fourth flank portion of the bottom portion Pc meet each other. This provides that very thin circular elongated objects can be gripped while achieving centralizing effect. For this reason in the embodiment showed in the Figures, the end point I5 of a normal vector nCa of each point Ca1 of the third flank portion of the bottom portion Pc is an end point of a same length normal vector nCb of a point Cb1 of fourth flank portion of the bottom portion Pc, the end points I5 of all said normal vectors nCa,nCb being points of said circle Y1 and thereby at same distance D from the pivot axis X.

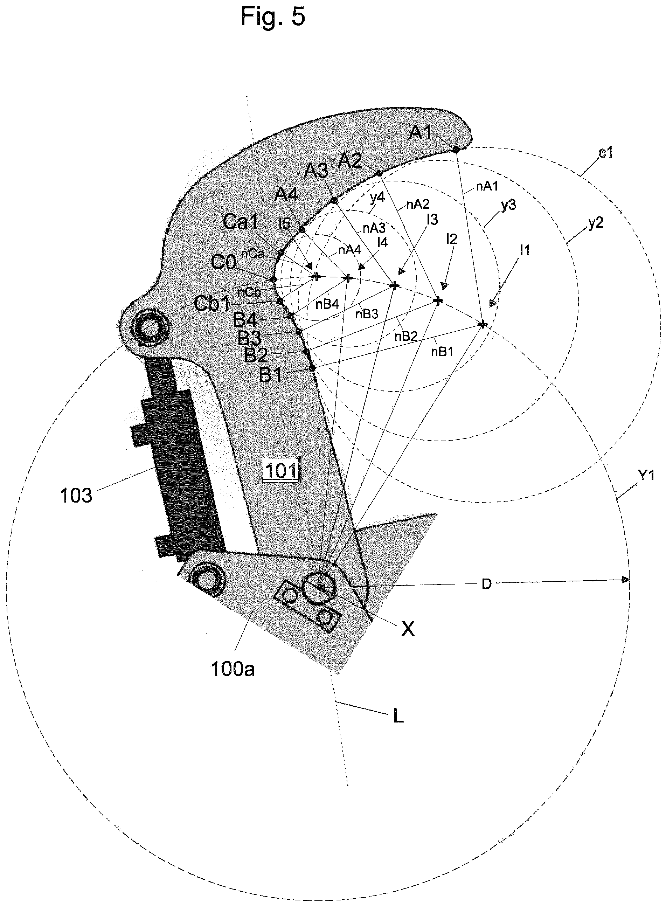

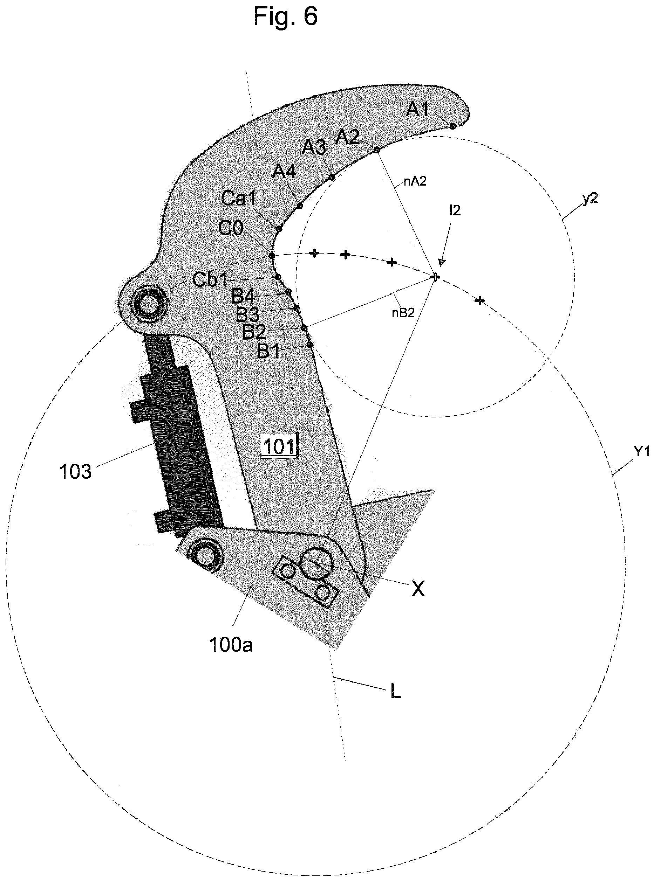

Generally, in Figures 5 and 6, the broken line circles and normal vectors are meant to teach how the gripping face 101a is to be shaped. The broken line circles also show how different sized elongated objects of circular cross section become positioned in a gripping situation. Figure 6 illustrates a simplified version of Figure 5 without many broken line circles of Figure 5, and in particular only one broken line circle y2.

The bottom portion Pc is preferably more specifically, although not necessarily such that the fourth flank portion of the bottom portion Pc, which is the continuation of the second flank portion Pb and extends between point C0 and the second flank portion Pb, has an inflection point Cb1, in particular on one side of which the profile of the fourth flank portion of the bottom portion Pc is convex and on the second side of which the profile of the fourth flank portion of the bottom portion Pc is concave. The first side here is the side of the second flank portion Pb and the second side is here the side of said bottom point C0.

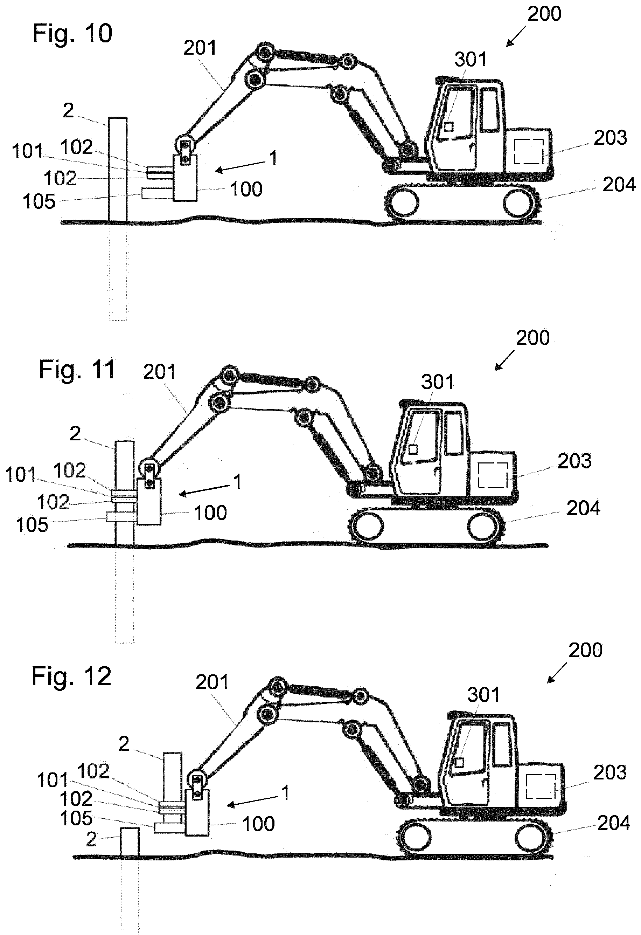

The cutting device 1 comprises a frame 100. In the preferred embodiment illustrated, the frame 100 comprises plurality of frame parts 100a, 100b, 100c attached to each other. The gripping members 101,102 are mounted pivotally on the frame 100, in particular on a first frame part 100a thereof. In the preferred embodiment illustrated in Figures 1-7, the first frame part 100a is fixed on a second frame part 100b comprised in the frame 100 as visible for instance in Figure 1. Preferably, the frame 100 is connectable to a mobile working machine 200 via the second frame part 100b. Preferably, as illustrated schematically in Figure 10, for example, the frame 100 is connectable to a mobile working machine 200, in particular to a boom 201 of a mobile working machine 200 via the second frame part 100b.

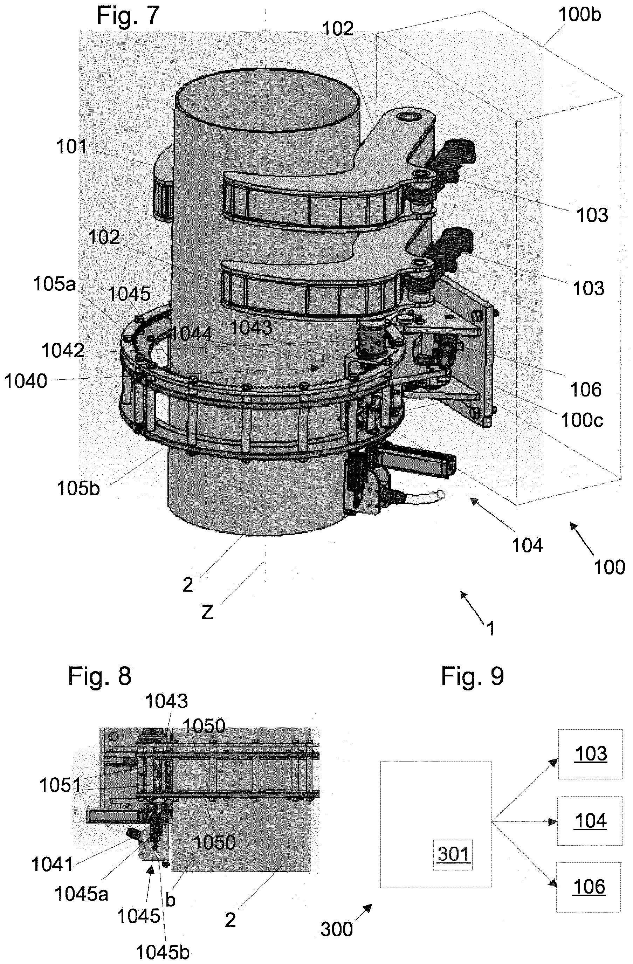

The cutting means 104 are preferably mounted on the frame 100, such as on a third frame part 100c comprised in the frame 100, as illustrated in Figure 7, for example. Thus, the gripping members 101,102 mounted pivotally on the frame 100 are pivotal relative to the frame 100, as well as relative to the cutting means 104.

In the preferred embodiment, the first and second gripping member 101,102 are mounted pivotally on the frame 100, in particular on the first frame part 100a thereof, via a common shaft S which is concentric with the pivotal axis X.

The preferred further details of the cutting means 104 are described in the following. In the preferred embodiment of Figures 1-6, the cutting means 104 comprise a movable cutting unit 1040; and a guide track 105 for guiding movement of the movable cutting unit 1040, the guide track 105 being shaped to guide the at least one cutting unit 1040 along a circular path with constant distance from a central axis Z, which central axis Z extends via a point of the aforementioned circle Y1;which has pivot axis X as centre. As illustrated, Z is parallel with X. The cutting means 104 further comprise means 1042 for moving the at least one cutting unit 1040 along the guide track 105. In the preferred embodiment, the guide track 105 forms, or has a first state where it forms, a ring around the central axis Z. For enabling the latter, the ring is openable and closeable, e.g. by pivoting. Particularly, in the preferred embodiment, the guide track 105 comprises a first track part 105a and a second guide track part 105b, which are movable away from each other for opening a gap G2 between them as viewed in direction of said central axis Z, for allowing an elongated object 2 to be brought via the gap G2 to be between the track parts 105a,105b, and towards each other for closing the gap G2 such that the track parts 105a,105b form a ring around the central axis Z. The cutting device 1 also comprises a means 106 for moving the track parts 105a,105b away from each other and towards each other. Said means 106 can be hydraulic or pneumatic for example. The moving means 106 preferably comprise a first actuator 106 actuatable to move first track part 105a and a second and a second actuator 106 actuatable to move the second guide track part 105b. Each said actuator 106 can be a hydraulic or pneumatic cylinder for example.

In the preferred embodiment illustrated, the cutting means 104 comprises a movable cutting unit 1040 which is a plasma cutting unit, and comprises a cutting torch 1041.

The guide track 105 is arranged to particularly to guide movement of the movable cutting unit 1040 such that the cutting unit 1040, and most importantly, its cutting torch 1041, maintains its angle relative to central axis Z. Thus, when the cutting unit 1040 is moved along the circular path, it turns during its travel. This is simple to implement by a guide track and guide element, which are utilized in many applications. In the illustrated preferred embodiment, this is implemented such that the cutting unit 1040 comprises a frame 1043 movable along the guide track 105 on which frame 1043 the cutting torch 1041 is mounted.

The guide track 105 comprises two guide bars which are spaced apart direction of said central axis Z and curved to extend around the central axis Z with constant distance from a central axis Z. The cutting unit 1040 comprises rollers arranged to run along the guide bars 1050 between them. The rollers 1051 have on their rims a groove preventing them from escaping from guidance of the guide bars 1050 towards or away from the central axis Z. The movement is provided by a rack and pinion type arrangement. A motor 1042 and a toothed roller 1044 drivable by the motor, are mounted on the frame 1043, and the toothed roller 1044 is arranged to mesh with a tooth pattern 1045 provided on the guide track 105.

The torch 1041 is preferably mounted on the frame 1043 pivotally around an axis which extends tangential with respect to the central axis Z. Thus, inclination thereof is adjustable with regards to central axis Z, and thereby also to the surface of the object 2 to be cut. Thus, a chamfered end face can be produced by cutting with the torch 1041, on the object 2. The cutting device comprises adjustable positioning means 1045 for the torch 1041, via which it is mounted on the frame 1043. The adjustable positioning means 1045 comprise an actuator 1045a arranged to move the torch when actuated. The adjustable positioning means 1045 comprise also a guide means 1045b for guiding the torch 1041 to pivot in a controlled manner, in particular around an axis which extends tangential with respect to the central axis Z, when the actuator 1045a is actuated. In Figure 8, broken line b illustrated direction of the torch 1041 and direction in which the cutting effect will be produced on the object 2 in the illustrated configuration.

Figure 10 illustrates an embodiment of a mobile working machine 200 comprising a cutting device 1 of a mobile working machine. The cutting device is as described referring to Figure 1.

The working machine 200 comprises a tiltable boom 201 and the cutting device 1 is connected to the tiltable boom 201. The mobile working machine 200 is in the preferred embodiment illustrated an excavator the bucket of which has been replaced with the cutting machine 1.

The mobile working machine 200 comprises one or more motor-driven moving members 204, in the illustrated case four wheels, supportable on a terrain and for moving the working machine 200 on the terrain.

The mobile working machine 200 comprises a motor 203 and the moving members 204 are rotatable moving members rotatable by the motor 203. The moving members 204 are tyres here but could be of alternative kind, for instance caterpillar tracks. Tyres or caterpillar tracks make the device well compatible with construction site use. Tyres are particularly useful since hereby the mobile working machine can be brought to the site by driving along roads.

Figures 10-12 illustrates steps of a method for cutting an elongated object 2, in particular a pile, according to an embodiment.

The method comprises providing a cutting device 1 as described referring to Figure 1 and/or a mobile machine 200 as described referring to Figure 10. This step has been illustrated in Figure 10. The method may also comprise before said providing, a step of inserting elongated objects 2, in particular piles, into soil.

After said providing, the method comprises positioning the cutting device 1 such that an elongated object 2, in particular pile 2, is placed in the gripping gap G; and thereafter actuating the moving means 103 to move the gripping members 101,102 towards each other to grip by their gripping faces 101a,102a the elongated object 2 placed in the gripping gap G from opposite sides. These steps have been illustrated in Figure 11. After said steps of positioning and actuating, the method comprises cutting the elongated object 2 with the cutting means 104. This step includes in the preferred embodiment moving at least one movable cutting unit 1040 by means 1042 for moving the at least one cutting unit 1040 guided by a guide track 105 along a circular path with constant distance from a central axis Z, which central axis Z extends via a point of the aforementioned circle Y1;which has pivot axis X as centre. Figure 12 illustrates a step of moving the upper end of the object 2 after cutting it loose from the stationary main part of the object 2, which is in this case a pile.

The method may also be regarded to include the steps of driving of the elongated objects in place. In this case, the method further comprises, at a suitable moment before said step of positioning the cutting device, driving plurality of elongated objects 2, i.e. piles, into soil in vertical position. This step is not illustrated in Figures, because this step, as such, may be of known kind. Thus, it can be performed e.g. by any known or otherwise suitable way of driving piles into soil.

The method preferably further comprises controlling actuation of said actuating means 103 and/or operation of the means 1042 for moving the at least one cutting unit 1040 of said cutting means 104 by a computer implemented control system 300.

The method preferably further comprises controlling operation of means 106 for moving a first track part 105a and a second guide track part 105b of a guide track 105 for guiding movement of the at least one movable cutting unit 1040 away from each other and towards each other.

The method preferably further comprises receiving input commands from a user via a user interface 301. The computer implemented control system 300 is then preferably configured to control one or more of said actuating means 103, said cutting means 104, means 106, in response to the input commands received via the user interface 301.

For facilitating safe and distant and machine aided controllability of the cutting device 1, said actuating means 103 and/or said cutting means 104 and/or operation of means 106 are provided for being controlled by a computer implemented control system 300.

For this purpose, the cutting device 1 or the mobile working device 200 comprises a computer implemented control system 300 configured to control one or more of:
- actuation of said actuating means 103, and/or
- operation of said cutting means 104, in operation of the means 1042 for moving the at least one cutting unit 1040.
- operation of means 106 for moving a first track part 105a and a second guide track part 105b of a guide track 105 for guiding movement of the at least one movable cutting unit 1040 away from each other and towards each other.

For this purpose, the control system 300 is connected to said actuating means 103 and/or said cutting means 104 and/or means 106, as illustrated in Figure 9.

The computer implemented control system 300 preferably comprises a user interface 301 for receiving input commands from a user e.g. a construction worker. The user interface is preferably disposed inside a cabin of the mobile working device 200, as illustrated in Figures 10-12. The user interface can be for instance a touch screen or button panel or handles according to operation of which the control system 300 is configured to control one or more of said actuating means 103, said cutting means 104, means 106.

In the preferred embodiments, the first gripping member 101 and a second gripping member 102 are offset from each other in direction of the axis X. For good operation it is not necessary that they are level with each other in direction of the axis X although in this direction close proximity is of course advantageous. Offset arrangement provides that the gripping members can be simply arranged to turn around the same axis X with similar structure. However this is not necessary, for example if one or them has a fork like end (lower end in Figure 1) connected to the shaft S or if said end is angled offset from the plane of the gripping faces in in direction of the axis X. In the preferred embodiment, there is one first gripping member 101 and two of the second gripping members 102, which are all offset in direction of the axis X, one second gripping member 102 being offset from the first gripping member 101 towards one direction along the axis X, and one second gripping member 102 being offset from the first gripping member 101 towards the other (opposite) direction along the axis X. This reduces the tendency of the gripping members 101,102 to tilt the object 2.

As mentioned, said object 2 is preferably an elongated object having a circular cross section. The object 2 is then most preferably a profile piece, the cross section of which is constant or at least substantially constant throughout the length thereof. Thus, the elongated object preferably has the shape of a circular cylinder or at least substantially the shape of a circular cylinder. The elongated object is preferably hollow and made of metal, but at least some of the advantages can be achieved also when cutting a solid elongated object.

Generally, the elongated object can be any elongated object as defined. As mentioned, said object 2 is preferably a hollow metal pile, but it could alternatively be a pile of different material or an elongated object, which is not a pile, but some other elongated object having a circular cross section, such as a log, for example, in which case the mobile working machine could be a harvester for example.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A cutting device (1) of a mobile working machine, for cutting elongated objects (2), in particular piles (2), and for being connected to a mobile working machine, comprising
a first gripping member (101) and a second gripping member (102), which gripping members (101,102) are pivotal around the same pivot axis (X), said gripping members (101,102) having gripping faces (101a,102a) delimiting from opposite sides a gripping gap (G) as viewed in direction of said pivot axis (X), the gripping members (101,102) being movable towards each other by pivoting around said pivot axis (X) for gripping by their gripping faces (101a,102a) an elongated object (2) placed in the gripping gap (G) from opposite sides, and away from each other for releasing the elongated object (2) from the grip; and
moving means (103) actuatable to move the gripping members (101,102) towards and away from each other; and
cutting means (104) including a cutting unit (1040) for cutting an elongated object (2) placed in the gripping gap (G);
wherein the gripping face (101a,102a) of each gripping member (101,102) is shaped to have a gripping recess (R) for receiving a side of the elongated object (2) placed in the gripping gap (G), the gripping recess (R) comprising:
a bottom point (C0) via which a circle (Y1) passes, which circle (Y1) has said pivot axis (X) as centre; and
a first flank portion (Pa) having a profile curved towards the bottom point (C0) from the outer side of the circle (Y1); and
a second flank portion (Pb) having a profile curved towards the bottom point (C0) from the inner side of the circle (Y1),
wherein
the profile of each of said first and second flank portion (Pa,Pb) as viewed in direction of said pivot axis (X) follows a curve approaching the circle (Y1) which has pivot axis (X) as centre from the outer and inner side of the circle (Y1), respectively; and
each said curve is defined by plurality of successive points (A1-A4; B1-B4), wherein the end point (I1-I4) of a normal vector (nA1-nA4) of each point (A1-A4) of the first flank portion (Pa) is an end point of a same length normal vector (nB1-nB4) of a point (B1-B4) of the second flank portion (Pb), the end points (I1-I4) of all said normal vectors (nA1-nA4, nA1-nA4) being points of said circle (Y1) and thereby at same distance (D) from the pivot axis (X).

2. A cutting device (1) according to claim 1, **wherein** the profile of the first flank portion (Pa) is concave and the profile of the second flank portion (Pb) is convex.

3. A cutting device (1) according to any of the preceding claims, **wherein** it comprises a frame (100) and the gripping members (101,102) are mounted pivotally on the frame (100).

4. A cutting device (1) according to any of the preceding claims, **wherein** the cutting means (104) comprises
at least one movable cutting unit (1040); and
a guide track (105) for guiding movement of the at least one movable cutting unit (1040), the guide track (105) being shaped to guide the at least one cutting unit (1040) along a circular path with constant distance from a central axis (Z), which central axis (Z) extends via a point of the aforementioned circle (Y1);which has pivot axis (X) as centre; and
means (1042) for moving the at least one cutting unit (1040) along the guide track (105).

5. A cutting device (1) according to any of the preceding claims, **wherein** the guide track (105) comprises a first track part (105a) and a second guide track part (105b), which are movable away from each other for opening a gap (G2) between them as viewed in direction of said central axis (Z), for allowing an elongated object (2) to be brought via the gap (G2) to be between the track parts (105a,105b), and towards each other for closing the gap (G2) such that the track parts (105a,105b) form a ring around the central axis (Z).

6. A cutting device (1) according to any of the preceding claims, **wherein** the cutting means (104) comprises a movable cutting unit (1040) which is a plasma cutting unit, and comprises a cutting torch.

7. A mobile working machine (200) comprising a cutting device (1) of a mobile working machine according to any of the preceding claims.

8. A mobile working machine (200) according to the preceding claim, **wherein**
the mobile working machine (200) comprises a tiltable boom (201) and the cutting device (1) is connected to the tiltable boom (201); and/or
the mobile working machine (200) comprises one or more motor-driven moving members (204) supportable on a terrain and for moving the working machine (200) on the terrain.

9. A method for cutting an elongated object (2), in particular a pile (2) comprising
providing a cutting device (1) and/or a mobile machine (200) according to any of the preceding claims; and
positioning the cutting device (1) such that an elongated object (2), in particular pile (2), is placed in the gripping gap (G); and
actuating the moving means (103) to move the gripping members (101,102) towards each other to grip by their gripping faces (101a,102a) the elongated object (2) placed in the gripping gap (G) from opposite sides; and
cutting the elongated object (2) with the cutting means (104).

10. A gripping member (101,102) comprising a pivot axis (X), and a gripping face (101a,102a) shaped to have a gripping recess (R) for receiving a side of an elongated object (2), the recess (R) comprising:
a bottom point (C0) via which a circle (Y1) passes, which circle (Y1) has said pivot axis (X) as centre; and
a first flank portion (Pa) having a profile curved towards the bottom point (C0) from the outer side of the circle (Y1); and
a second flank portion (Pb) having a profile curved towards the bottom point (C0) from the inner side of the circle (Y1);
wherein the profile of each of said first and second flank portion (Pa,Pb) as viewed in direction of said pivot axis (X) follows a curve approaching the circle (Y1) which has pivot axis (X) as centre from the outer and inner side of the circle (Y1), respectively; and
wherein each said curve is defined by plurality of successive points (A1-A4; B1-B4), wherein the end point (I1-I4) of a normal vector (nA1-nA4) of each point (A1-A4) of the first flank portion (Pa) is an end point of a same length normal vector (nB1-nB4) of a point (B1-B4) of the second flank portion (Pb), the end points (I1-I4) of all said normal vectors (nA1-nA4, nA1-nA4) being points of said circle (Y1) and thereby at same distance (D) from the pivot axis (X).

11. A gripping member (101,102) according to the preceding claim, **wherein** the profile of the first flank portion (Pa) is concave and the profile of the second flank portion (Pb) is convex.

12. A cutting device (1) according to any of the preceding claims 1-6, a mobile working machine (200) according to any of the preceding claims 7-8, a method according to the preceding claim 9 or a gripping member (101,102) according to any of the preceding claims 10-11, **wherein** the elongated object (2) is an object having circular cross section, preferably a pile, most preferably a pile, which is a hollow metal tube having circular cross section.
